# EUROPÄISCHE PATENTSCHRIFT

(11) **EP 0 401 706 B1**
(45) Veröffentlichungstag und Bekanntmachung des Hinweises auf die Patenterteilung: **18.11.1993**
(21) Anmeldenummer: 90110478.6
(22) Anmeldetag: 01.06.1990
(51) Int. Cl.: F16D 55/224

(54) **Teilbelag-Scheibenbremse mit Schwimmsattel**
Spot-type disc brake with floating caliper
Frein à disque à garniture partielle avec étrier flottant

(30) Priorität: 09.06.1989 DE 8907101 U
(43) Veröffentlichungstag der Anmeldung: 12.12.1990
(73) Patentinhaber: LUCAS INDUSTRIES public limited company, Birmingham, B19 2XF West Midlands (GB)
(72) Erfinder: Heibel, Helmut, D-5431 Moschheim (DE)
(74) Vertreter: Goetz, Rupert, Dipl.-Ing.

(56) Entgegenhaltungen:
- EP-A- 0 229 618
- DE-A- 2 757 392
- DE-A- 2 845 404
- FR-A- 2 218 789

## Beschreibung

Die Erfindung betrifft eine Teilbelag-Scheibenbremse mit
- einem Bremsträger, der mindestens auf einer Seite einer Bremsscheibe ein Paar Arme aufweist, die in Drehrichtung der Bremsscheibe gegeneinander versetzt sind,
- zwei Bremsbacken, die an je eine Seite der Bremsscheibe anlegbar sind,
- einem Schwimmsattel, der die Bremsscheibe sowie die beiden Bremsbacken übergreift,
- einer Betätigungsvorrichtung, die auf einer Seite der Bremsscheibe am Schwimmsattel angeordnet ist, um eine der Bremsbacken unmittelbar, und die andere Bremsbacke durch Verschieben des Schwimmsattels, an die Bremsscheibe anzudrücken, und
- Führungen, die zwischen je einem der Arme und dem Schwimmsattel angeordnet sind, um dessen Verschiebung zu ermöglichen und Bremskräfte auf den Bremsträger zu übertragen, und die je einen Führungskörper mit einer in Richtung der Drehachse der Bremsscheibe verlaufenden Nut sowie einen in diese eingreifenden Vorsprung aufweisen.

Aus der EP 0229618 A (= US 4775033 A) ist eine Scheibenbremse dieser Gattung bekannt, bei der die Vorsprünge von zylindrischen Stiften gebildet sind und die Nuten einen entsprechenden rechteckigen Querschnitt haben oder die Vorsprünge im Profil keilförmig und die Nuten entsprechend trapezförmig sind. Die Vorsprünge sind an den Enden von Gewindestiften ausgebildet, die sich so einstellen lassen, daß der Schwimmsattel mit kleinem Führungsspiel leicht verschiebbar ist.

Der Erfindung liegt die Aufgabe zugrunde, eine Teilbelag-Scheibenbremse der genannten Gattung derart weiterzubilden, daß selbst außergewöhnlich große Bremskräfte vom Sattel über die Führungen auf den Bremsträger übertragen werden können, ohne daß die Führungen darunter leiden, und ohne daß die Arme des Bremsträgers, an denen die Führungen ausgebildet oder abgestützt sind, außergewöhnlich kräftig bemessen zu sein brauchen.

Die Aufgabe ist erfindungsgemäß bei einer Teilbelag-Scheibenbremse der genannten Gattung dadurch gelöst, daß die Nut und der Vorsprung jeder Führung, die beim Bremsen bei Betriebsdrehrichtung der Bremsscheibe mit Bremskräften belastet ist, in einem zur Bremsscheibe parallelen Querschnitt komplementäre kreisbogenförmige Profile aufweisen.

Bei den erfindungsgemäßen Führungen ändern sich die Berührungsverhältnisse zwischen den komplementären kreisbogenförmigen Profilen auch dann nicht, wenn die vom Sattel über eine solche Führung auf den zugehörigen Arm des Bremsträgers übertragene Bremskraft so groß ist, daß der Arm sich in den durch seine Elastizität gegebenen Grenzen erheblich verbiegt. Bei bekannten rechteckigen oder trapezförmigen Führungsprofilen würden sich in einem solchen Fall örtlich überhöhte Flächenpressungen oder sogar Verkantungen ergeben, die den Verschleiß der Führungen begünstigen und die Verschiebung des Schwimmsattels erschweren würden. Durch die erfindungsgemäße Gestaltung, die mindestens die von Bremskräften belasteten Führungen betrifft, ist demgegenüber sichergestellt, daß der Sattel sich auch bei Belastung durch hohe Bremskräfte ausreichend leicht verschieben läßt und die Führungen nicht wesentlich stärker verschleißen als bei mittleren Belastungen, bei denen sich noch kein Arm des Bremsträgers nennenswert verbiegt.

Bei bevorzugten Ausführungsformen der Erfindung weisen die Nuten und Vorsprünge sämtlicher Führungen komplementäre kreisbogenförmige Profile auf. Dadurch ergeben sich die beschriebenen Vorteile auch für den Fall, daß die Bremse ausnahmsweise bei Drehung der Bremsscheibe entgegen ihrer Betriebsdrehrichtung, also beispielsweise bei Rückwärtsfahrt eines mit einer solchen Bremse ausgerüsteten Fahrzeugs, außergewöhnlich kräftig betätigt werden sollte. Außerdem läßt sich durch möglichst weitgehend gleiche Gestaltung sämtlicher Führungen die Herstellung der Bremse verbilligen. Das erfindungsgemäße kreisbogenförmige Profil der Vorsprünge läßt sich in besonders einfacher Weise dadurch erzeugen, daß jeder der Vorsprünge von einer Kugelkalotte an dem in die zugehörige Nut eingreifenden Ende eines Gewindestifts gebildet ist.

Es ist ferner zweckmäßig, wenn die Nut mindestens einer Führung, die beim Bremsen bei Betriebsdrehrichtung der Bremsscheibe von Bremskräften entlastet ist, annähernd parallele Wandabschnitte aufweist, die sich an das halbkreisförmige Profil der Nut anschließen und den zugehörigen Vorsprung auch dann noch führen, wenn dieser infolge elastischer Verformung des Bremsträgers das halbkreisförmige Profil der zugehörigen Nut nicht berührt.

Außerdem ist es vorteilhaft, wenn die Nut mindestens einer Führung, die beim Bremsen bei Betriebsdrehrichtung der Bremsscheibe von Bremskräften entlastet ist, durch einen Schlitz von begrenzter axialer Länge vertieft ist, und der zugehörige Vorsprung einen in den Schlitz eingreifenden Zapfen trägt, der die axiale Verschiebbarkeit des Schwimmsattels begrenzt, ohne an der Übertragung von Bremskräften beteiligt zu sein.

Schließlich ist es von besonderem Vorteil, wenn zu jeder Führung eine elastische Manschette gehört, die mit einem ihrer Enden am zugehörigen Führungskörper dicht befestigt ist und mit einer an ihrem anderen Ende ausgebildeten Dichtlippe auf einem den zugehörigen Vorsprung tragenden zylindrischen Schaft geführt ist. Solche Manschetten sind bei der eingangs beschriebenen bekannten Bremse vorhanden. Erfindungsgemäß sind sie dadurch weitergebildet, daß ihre Dichtlippe an ihrer der zugehörigen Nut zugewandten Seite durch einen mit ihr fest verbundenen Metallring versteift und gegen Eingeklemmtwerden in der Nut geschützt ist.

Ein Ausführungsbeispiel der Erfindung wird im folgenden anhand schematischer Zeichnungen mit weiteren Einzelheiten erläutert. Es zeigen:
- Fig. 1: eine Seitenansicht einer Teilbelag-Scheibenbremse,
- Fig. 2: den Schnitt II-II in Fig. 1,
- Fig. 3: den Ausschnitt III in Fig. 1,
- Fig. 4: den entsprechenden Ausschnitt IV in Fig. 2,
- Fig. 5: den Ausschnitt V in Fig. 1,
- Fig. 6: den entsprechenden Ausschnitt VI in Fig. 2,
- Fig. 7: eine Abwandlung von Fig. 3 und
- Fig. 8: eine Abwandlung von Fig. 5.

Die dargestellte Scheibenbremse hat einen Bremsträger 10 üblicher Bauart, der auf beiden Seiten einer mit strichpunktierten Linien angedeuteten Bremsscheibe 12 je ein Paar Arme 14 und 16 bzw. 18 und 20 aufweist. Bei der mit einem Pfeil 22 angedeuteten Betriebsdrehrichtung der Bremsscheibe 12 werden die Arme 14 und 18 als einlaufseitige Arme, die Arme 16 und 20 hingegen als auslaufseitige Arme bezeichnet.

Beiderseits der Bremsscheibe 12 ist je eine Bremsbacke 24 bzw. 26 angeordnet. Über diese und die Bremsscheibe 12 greift ein Schwimmsattel 28, der an den Armen 14 und 18 mittels je einer einlaufseitigen Führung 30, und an den Armen 16 und 20 mittels je einer auslaufseitigen Führung 32 geführt ist. Am Sattel 28 ist ein Zylinder 34 einstückig ausgebildet, dessen Achse A in bezug auf die Symmetrieebene B der Bremsbacken 24 und 26 in Drehrichtung 22 der Bremsscheibe 12 versetzt ist und einen Kolben 36 enthält.

Am Kolben 36 ist mit einer Schraube 38 eine Tragplatte 40 befestigt, die einen in den Kolben 36 eingreifenden und in ihm zentrierten Napf 42 sowie eine einlaufseitige Abwinkelung 44 und eine auslaufseitige Abwinkelung 46 aufweist. An der Platte 40 ist die Bremsbacke 24 abgestützt, so daß sie vom Kolben 36 über die Platte 40 unmittelbar an die Bremsscheibe 12 andrückbar ist. Die andere Bremsbacke 26 ist an einem Schenkel 48 des Schwimmsattels 28 abgestützt. Der Schwimmsattel 28 ist auf seiner die Betätigungsvorrichtung 34 und 36 aufweisenden Seite über die Platte 40 mittels der zugehörigen Führungen 30 und 32 am Bremsträger 10 geführt. Auf der anderen Seite der Bremsscheibe 12 ist der Schenkel 48 des Schwimmsattels 28 mittels der dort angeordneten Führungen 30 und 32 unmittelbar am Bremsträger 10 geführt.

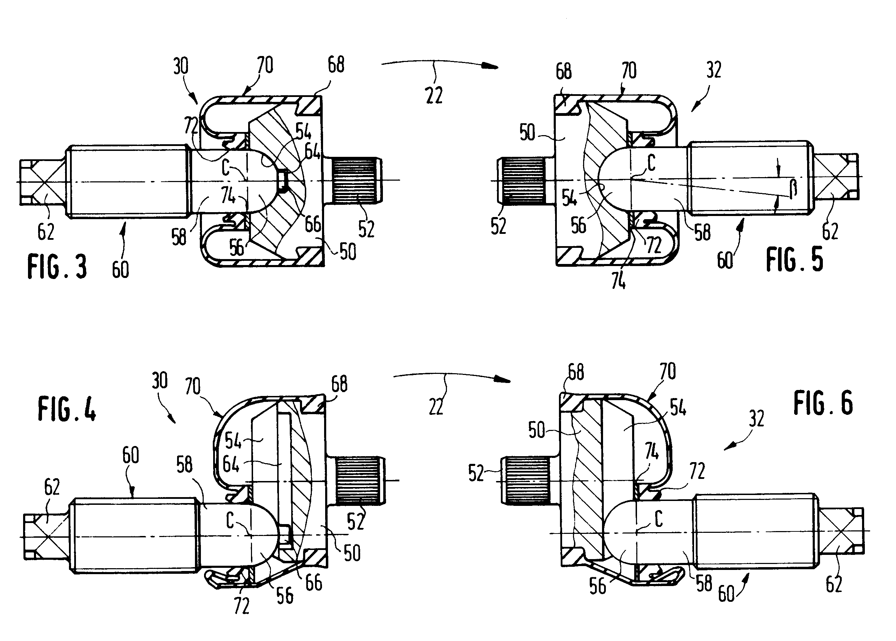

Die beiden einlaufseitigen Führungen 30 auf beiden Seiten der Bremsscheibe 12 sind völlig gleich; sie sind in Fig. 3 und 4 genauer dargestellt. Sie haben je einen Führungskörper 50 mit einem Zapfen 52, der in der Abwinkelung 44 der Platte 40 bzw. im Schenkel 48 des Schwimmsattels 28 derart befestigt ist, daß der Führungskörper 50 sich parallel zur Achse A, und somit auch zur Drehachse der Bremsscheibe 12, erstreckt. In jeden Führungskörper 50 ist eine zur Achse A parallele Nut 54 von halbkreisförmigem Querschnitt eingearbeitet.

In der Nut 54 ist ein Vorsprung 56 geführt, der ein komplementäres halbkreisförmiges Profil aufweist. Im dargestellten Beispiel ist dieses Profil dadurch gebildet, daß der Vorsprung 56 halbkugelförmig gestaltet ist. Der Vorsprung 56 ist am Ende eines zylindrischen Schafts 58 ausgebildet, der zu einem in den zugehörigen Arm 14 bzw. 18 eingeschraubten Gewindestift 60 gehört. Der Gewindestift 60 ist rechtwinklig zur Symmetrieebene B angeordnet und hat einen vom Vorsprung 56 entfernten Endabschnitt 62 mit einem Vierkant, einem Innensechskant od.dgl., an dem ein Werkzeug zum Drehen des Gewindestift 60 angesetzt werden kann.

Gemäß Fig. 3 und 4 hat der Führungskörper 50 der einlaufseitigen Führungen 30 am Grund seiner Nut 54 einen ebenfalls achsparallelen Schlitz 64, der sich nicht über die gesamte Länge der Nut 54 erstreckt und einen vom Vorsprung 56 wegragenden kleinen Zapfen 66 mit Spiel aufnimmt; dadurch ist die Strecke, um die sich der Schwimmsattel 28 in bezug auf den Bremsträger 10 verschieben läßt auf das für den Betrieb der Bremse notwendige Maß beschränkt, und es wird verhindert, daß der Schwimmsattel 28 sich vor dem Einbau der Bremse vom Bremsträger 10 trennt.

Am Führungskörper 50 ist ein hakenförmiger Randwulst 68 einer elastischen Manschette 70 befestigt, an deren anderem Ende eine Dichtlippe 72 ausgebildet ist. An die der Nut 54 zugewandte Stirnfläche der Dichtlippe 72 ist ein steifer Metallring 74 anvulkanisiert. Der halbkugelförmige Vorsprung 56 ist durch die Dichtlippe 72 und den Metallring 74 hindurchgesteckt, so daß die Dichtlippe 72 gegen den zylindrischen Schaft 58 des Gewindestifts 60 abdichtet. Der Metallring 74 verhindert, daß die Dichtlippe 72 den Führungskörper 50 unmittelbar berührt und dabei beschädigt wird.

Die beiden auslaufseitigen Führungen 32 sind in Fig. 5 und 6 genauer dargestellt. Sie stimmen mit den einlaufseitigen Führungen 30 weitgehend überein; vergleichbare Bauteile sind deshalb in Fig. 5 und 6 mit gleichen Bezugszeichen versehen wie in Fig. 3 und 4. Unterschiede bestehen darin, daß bei jeder auslaufseitigen Führungen 32 der Schlitz 64 im Führungskörper 50 sowie der in ihn eingreifende Zapfen 66 fortgelassen sind. Bei jeder der auslaufseitigen Führungen 32 steht somit die gesamte Fläche der Nut 54 von halbkreisförmigem Profil sowie die gesamte Fläche des halbkugelförmigen Vorsprungs 56 zur Übertragung von Bremskräften zur Verfügung.

Jeder der Gewindestifte 60 kann in bezug auf den zugehörigen Führungskörper 50 in einem verhältnismäßig großen, mit dem Winkel in Fig. 5 angedeuteten Bereich um den gemeinsamen Profilmittelpunkt C der Nut 54 und des in sie eingreifenden Vorsprungs 56 schwenken, ohne daß die Berührungsverhältnisse sich merklich ändern. Es ist deshalb unschädlich, wenn die Arme 16 und 20, an denen die auslaufseitigen Führungen 32 angeordnet sind, von Bremskräften elastisch verbogen werden.

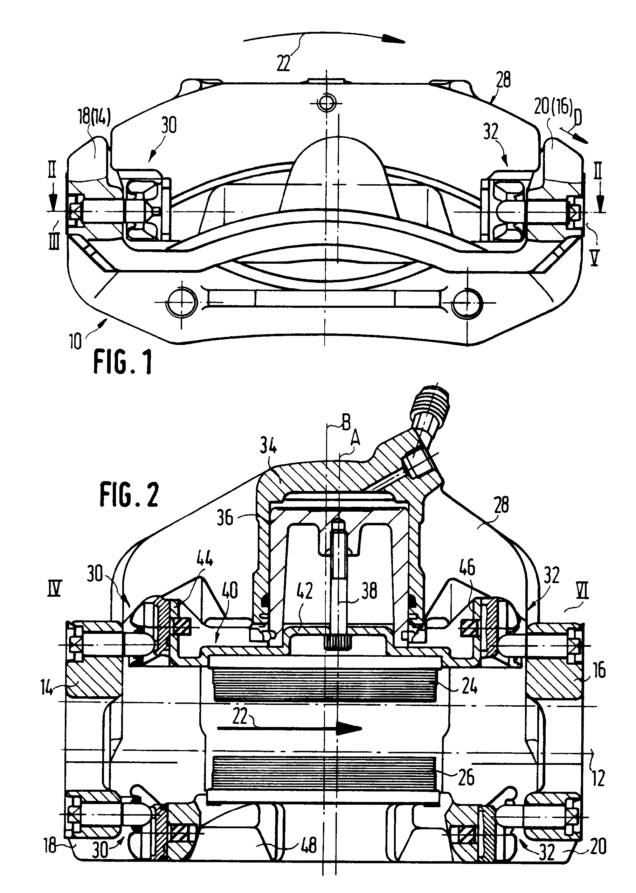

In Fig. 1 ist eine Verbiegung der Arme 16 und 18, die bei kräftigem Bremsen auftreten kann, mit einem Pfeil D angedeutet. Eine solche Verbiegung hat zur Folge, daß die Profilmittelpunkte C der auslaufseitigen Nuten 54 und Vorsprünge 56 sowie die Profilmittelpunkte der auflaufseitigen Nuten 54 sich von den Profilmittelpunkten der einlaufseitigen Vorsprünge 56 entfernen. An den einlaufseitigen Führungen 30 kann deshalb bei kräftigem Bremsen ein Spiel entstehen. Ein solches Spiel ist jedoch unschädlich, solange es bestimmte Grenzen nicht überschreitet.

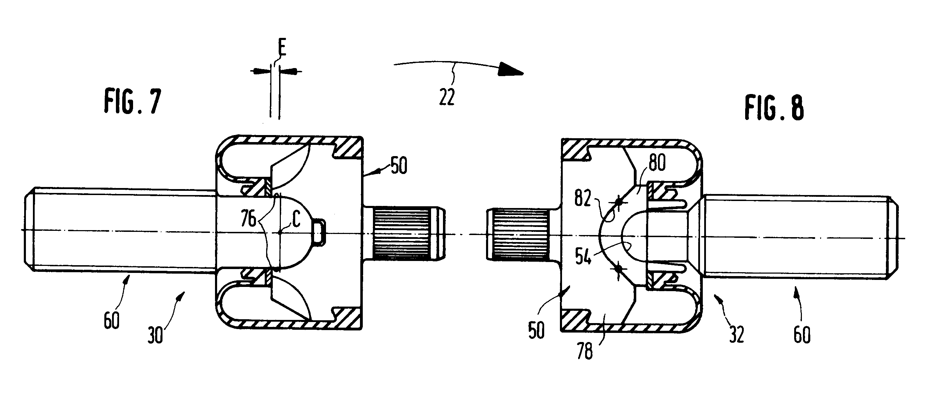

In Fig. 7 ist eine einlaufseitige Führung 30 dargestellt, die gegenüber der in Fig. 3 und 4 dargestellten dadurch abgewandelt ist, daß die Nut 54 im Führungskörper 50 Wandabschnitte 76 aufweist, die sich an das halbkreisförmige Nutprofil anschließen und von diesem ausgehend geringfügig, beispielsweise mit einem Winkel von 5° bis 10°, divergieren. Diese Wandabschnitte haben eine axiale Länge E, die so groß ist, daß der Vorsprung 56 zwischen den Wandabschnitten 76 auch dann noch spielfrei geführt ist, wenn der Schwimmsattel 28 infolge Durchbiegung der auslaufseitigen Arme 16 und 20 in Drehrichtung 22 der Bremsscheibe 12 um den Betrag E versetzt worden ist.

In Fig. 8 ist eine Abwandlung einer auslaufseitigen Führung 32 dargestellt, die sich von Fig. 5 und 6 dadurch unterscheidet, daß der Führungskörper 50 unterteilt ist in einen Tragkörper 78 und einen Gleitkörper 80, in dem die Nut 54 ausgebildet ist. Der Gleitkörper 80 besteht aus besonders gleitfähigem hartem Werkstoff, beispielsweise Sintermetall, und ist in eine abgerundet V-förmige Nut 82 des Tragkörpers 78 derart eingebettet, daß zwischen Tragkörper 78 und Gleitkörper 80 selbst bei höchsten Belastungen der Bremse nur geringe Hertz'sche Flächenpressungen entstehen.

## Patentansprüche

1. Teilbelag-Scheibenbremse mit
- einem Bremsträger (10), der mindestens auf einer Seite einer Bremsscheibe (12) ein Paar Arme (14, 16; 18, 20) aufweist, die in Drehrichtung (22) der Bremsscheibe (12) gegeneinander versetzt sind,
- zwei Bremsbacken (24, 26), die an je eine Seite der Bremsscheibe (12) anlegbar sind,
- einem Schwimmsattel (28), der die Bremsscheibe (12) sowie die beiden Bremsbacken (24, 26) übergreift,
- einer Betätigungsvorrichtung (34, 36), die auf einer Seite der Bremsscheibe (12) am Schwimmsattel (28) angeordnet ist, um eine der Bremsbacken (24) unmittelbar, und die andere Bremsbacke (26) durch Verschieben des Schwimmsattels (28) an die Bremsscheibe (12) anzudrücken, und
- Führungen (30, 32), die zwischen je einem der Arme (14, 18; 16, 20) und dem Schwimmsattel (28) angeordnet sind, um dessen Verschiebung zu ermöglichen und Bremskräfte auf den Bremsträger (10) zu übertragen, und die je einen Führungskörper (50) mit einer in Richtung der Drehachse der Bremsscheibe (12) verlaufenden Nut (54) sowie einen in diese eingreifenden Vorsprung (56) aufweisen, dadurch **gekennzeichnet,** daß die Nut (54) und der Vorsprung (56) jeder Führung (32), die beim Bremsen bei Betriebsdrehrichtung (22) der Bremsscheibe (12) mit Bremskräften belastet ist, in einem zur Bremsscheibe (12) parallelen Querschnitt komplementäre kreisbogenförmige Profile aufweisen.

2. Teilbelag-Scheibenbremse nach Anspruch 1,
dadurch **gekennzeichnet,** daß die Nuten (54) und Vorsprünge (56) sämtlicher Führungen (30, 32) komplementäre kreisbogenförmige Profile aufweisen.

3. Teilbelag-Scheibenbremse nach Anspruch 1 oder 2,
dadurch **gekennzeichnet,** daß jeder der Vorsprünge (56) von einer Kugelkalotte an dem in die zugehörige Nut (54) eingreifenden Ende eines Gewindestifts (60) gebildet ist.

4. Teilbelag-Scheibenbremse nach einem der Ansprüche 1 bis 3,
dadurch **gekennzeichnet,** daß die Nut (54) mindestens einer Führung (30), die beim Bremsen bei Betriebsdrehrichtung (22) der Bremsscheibe (12) von Bremskräften entlastet ist, annähernd parallele Wandabschnitte (76) aufweist, die sich an das halbkreisförmige Profil der Nut (54) anschließen und den zugehörigen Vorsprung (56) auch dann noch führen, wenn dieser infolge elastischer Verformung des Bremsträgers (10) das halbkreisförmige Profil der zugehörigen Nut (54) nicht berührt.

5. Teilbelag-Scheibenbremse nach einem der Ansprüche 1 bis 4,
dadurch **gekennzeichnet,** daß die Nut (54) mindestens einer Führung (30), die beim Bremsen bei Betriebsdrehrichtung (22) der Bremsscheibe (12) von Bremskräften entlastet ist, durch einen Schlitz (64) von begrenzter axialer Länge vertieft ist, und der zugehörige Vorsprung (56) einen in den Schlitz (64) eingreifenden Zapfen (66) trägt, der die axiale Verschiebbarkeit des Schwimmsattels (28) begrenzt, ohne an der Übertragung von Bremskräften beteiligt zu sein.

6. Teilbelag-Scheibenbremse nach einem der Ansprüche 1 bis 5,
dadurch **gekennzeichnet,** daß zu jeder Führung (30, 32) eine elastische Manschette (70) gehört, die mit einem ihrer Enden (68) am zugehörigen Führungskörper (50) dicht befestigt ist und mit einer an ihrem anderen Ende ausgebildeten Dichtlippe (72) auf einem den zugehörigen Vorsprung (56) tragenden Schaft (58) geführt ist, und daß diese Dichtlippe (72) an ihrer der zugehörigen Nut (54) zugewandten Seite durch einen mit ihr fest verbundenen Metallring (74) versteift und gegen Eingeklemmtwerden in der Nut (54) geschützt ist.

## Claims

1. A spot-type disc brake, comprising
- a brake carrier member (10) which includes a pair of arms (14,16; 18,20) at least at one side of a brake disc (12) and offset with respect to each other in the direction of rotation (22) of the brake disc (12),
- two brake pads (24, 26) adapted to be applied to one side each of the brake disc (12),
- a floating caliper (28) straddling the brake disc (12) and both brake pads (24, 26),
- an actuator (34, 36) disposed at one side of the brake disc (12) on the floating caliper (28) to urge one of the brake pads (24) directly against the brake disc (12) and the other one (26) by displacing the floating caliper (28), and
- guide means (30, 32) disposed between one each of the arms (14, 18; 16, 20) and the floating caliper (28) to permit displacement of the floating caliper and transmit braking forces to the carrier member (10) and each including a guide body (50) formed with a groove (54) which extends in the direction of the axis of rotation of the brake disc (12) and a projection (56) which engages in the groove, **characterized** in that the groove (54) and the projection (56) of each guide means (32) which is loaded by braking forces, upon braking in the normal direction of rotation (22) of the brake disc (12), have complementary circular arc shaped profiles in a cross section parallel to the brake disc (12).

2. The spot type disc brake as claimed in claim 1, characterized in that the grooves (54) and the projections (56) of all the guide means (30, 32) have complementary profiles of circular arc shape.

3. The spot type disc brake as claimed in claim 1 or 2, characterized in that each one of the projections (56) is embodied by a spherical segment formed at the end of a threaded pin (60) which engages in the corresponding groove (54).

4. The spot type disc brake as claimed in any one of claims 1 to 3, characterized in that the groove (54) of at least one guide means (30) which is relieved of braking forces, upon braking in the normal direction of rotation (22) of the brake disc (12), has approximately parallel wall sections (76) adjacent the semicircular profile of the groove (54) to guide the corresponding projection (56) even if the latter does not contact the semicircular profile of the associated groove (54) because of elastic deformation of the carrier member (10).

5. The spot type disc brake as claimed in any one of claims 1 to 4, characterized in that the groove (54) of at least one guide means (30) which is relieved of braking forces, upon braking in the normal direction of rotation (22) of the brake disc (12), is deepened by a slot (64) of limited axial length, and the corresponding projection (56) carries a pin (66) which engages in the slot (64) to limit the axial movability of the floating caliper (28) without taking part in the transmission of braking forces.

6. The spot type disc brake as claimed in any one of claims 1 to 5, characterized in that each guide means (30, 32) comprises an elastic sleeve (70) which is tightly secured at one end (68) to the corresponding guide body (50), while a sealing lip (72) formed at its other end is guided on a shank (58) which carries the associated projection (56), and in that this sealing lip (72) is stiffened, at its side facing the corresponding groove (54), by a metal ring (74) firmly connected to the sealing lip and protecting it from getting pinched in the groove (54).

## Revendications

1. Frein à disque à garniture partielle comportant :
- un support de frein (10), qui comporte au moins d'un côté d'un disque de frein (12) une paire de bras (14, 16 ; 18, 20), qui sont décalés mutuellement dans le sens de rotation (22) du disque de frein (12),
- deux mâchoires de frein (24, 26), qui peuvent être appliquées contre un côté respectif du disque de frein (12),
- un étrier flottant (28), qui est disposé au-dessus du disque de frein (12) et des deux mâchoires de frein (24, 26),
- un dispositif d'actionnement (34, 36), qui est monté d'un côté du disque de frein (12) sur l'étrier flottant (28) de façon à appliquer contre le disque de frein (12) une des mâchoires (24) directement, et l'autre mâchoire de frein (26) par déplacement de l'étrier flottant (28), et
- des guides (30, 32), qui sont disposés entre un bras respectif (14, 18 16, 20) et l'étrier flottant (28) de façon à permettre sa translation et la transmission de forces de freinage au support de frein (10), et qui comportent chacun un corps de guidage (50) pourvu d'une rainure (54) orientée dans la direction de l'axe de rotation du disque de frein (12) ainsi qu'une saillie (56) s'engageant dans cette rainure, caractérisé en ce que la rainure (54) et la saillie (56) de chaque guide (32), qui est sollicité, lors d'un freinage, dans le sens de rotation de service (22) du disque de frein (12), par des forces de freinage, comportent des profils en arcs de cercle complémentaires dans une section parallèle au disque de frein (12).

2. Frein à disque à garniture partielle selon la revendication 1, caractérisé en ce que les rainures (54) et les saillies (56) de tous les guides (30, 32) ont des profils en forme d'arcs de cercle complémentaires.

3. Frein à disque à garniture partielle selon la revendication 1 ou 2, caractérisé en ce que chacune des saillies (56) est constituée par une calotte de sphère située à l'extrémité d'une tige filetée (60) qui s'engage dans la rainure associée (54).

4. Frein à disque à garniture partielle selon une des revendications 1 à 3, caractérisé en ce que la rainure (54) d'au moins un guide (30), qui est soulagé des forces de freinage, lors d'un freinage, dans le sens de rotation de service (22) du disque de frein (12), comporte des parties de paroi (76) approximativement parallèles, qui se raccordent au profil de forme demi-circulaire de la rainure (54) et qui guident également encore la saillie correspondante (56) lorsque celle-ci, par suite d'une déformation élastique du support de frein (10), n'est plus en contact avec le profil demi-circulaire de la rainure associée (54).

5. Frein à disque à garniture partielle selon une des revendications 1 à 4, caractérisé en ce que la rainure d'au moins un guide (30), qui est soulagé des forces de freinage, lors d'un freinage, dans le sens de rotation de service (22) du disque de frein (12), est approfondie par une fente (64) d'une longueur axiale limitée, et la saillie correspondante (56) porte un têton (66), s'engageant dans la fente (64) et limitant la possibilité de translation axiale de l'étrier flottant (28), sans participer à la transmission de forces de freinage.

6. Frein à disque à garniture partielle selon une des revendications 1 à 5, caractérisé en ce qu'à chaque guide (30, 32) est associée une garniture élastique (70), qui est fixée de façon étanche par une de ses extrémités (68) sur le corps de guidage associé (50) et qui est guidée par une lèvre d'étanchéité (72), formée à son autre extrémité, sur une tige (58) portant la saillie correspondante (56), et en ce que cette lèvre d'étanchéité (72) est renforcée, sur son côté dirigé vers la rainure associée (54), par un anneau métallique (74) relié rigidement avec elle et elle est protégée contre un blocage dans la rainure (54).
